# EUROPÄISCHE PATENTSCHRIFT

(11) **EP 0 748 719 B1**
(45) Veröffentlichungstag und Bekanntmachung des Hinweises auf die Patenterteilung: **16.05.2001**
(21) Anmeldenummer: 95118806.9
(22) Anmeldetag: 30.11.1995
(51) Int. Cl.: B60R 1/06

(54) **Fahrzeugaussenspiegel mit motorisch schwenkbarem Spiegelkopf**
Vehicle extension mirror with motorised pivotable mirror lead
Miroir extérieur d'un véhicule avec tête à miroir pivotable à moteur

(30) Priorität: 15.06.1995 DE 19521432
(43) Veröffentlichungstag der Anmeldung: 18.12.1996
(73) Patentinhaber: Donnelly Hohe GmbH & Co. KG, 97903 Collenberg (DE)
(72) Erfinder: Stapp, Armin, D-63820 Elsenfeld (DE); Seitz, Edwin, D-97909 Stadtprozelten (DE)
(74) Vertreter: Zinngrebe, Horst, Dr.rer.nat.

(56) Entgegenhaltungen:
- EP-A- 0 519 117
- EP-A- 0 652 135
- DE-A- 4 327 388
- DE-A- 4 427 410
- PATENT ABSTRACTS OF JAPAN vol. 096, no. 004, 30. April 1996 & JP 07 315128 A (MURAKAMI KAIMEIDOU:KK), 5. Dezember 1995
- PATENT ABSTRACTS OF JAPAN vol. 010, no. 029 (M-451), 5. Februar 1986 & JP 60 185651 A (NISSAN JIDOSHA KK), 21. September 1985
- PATENT ABSTRACTS OF JAPAN vol. 014, no. 373 (M-1009), 13. August 1990 & JP 02 136347 A (DAITO PRESS KOGYO KK), 24. Mai 1990
- PATENT ABSTRACTS OF JAPAN vol. 011, no. 352 (M-643), 18. November 1987 & JP 62 131843 A (TOKAI RIKA CO LTD), 15. Juni 1987
- PATENT ABSTRACTS OF JAPAN vol. 018, no. 398 (M-1645), 26. Juli 1994 & JP 06 115400 A (TOYOTA MOTOR CORP), 26. April 1994
- PATENT ABSTRACTS OF JAPAN vol. 011, no. 318 (M-632), 16. Oktober 1987 & JP 62 101558 A (TOKAI RIKA CO LTD), 12. Mai 1987

## Beschreibung

Die Erfindung betrifft einen Fahrzeugaußenspiegel mit einem am Fahrzeug befestigbaren Spiegelfuß und einem ein Spiegelglas tragenden, mittels eines Motors relativ zum Spiegelfuß verschwenkbaren, am Spiegelfuß mit einem Gelenk befestigten und unter Schlageinwirkung aus einer Gebrauchslage an das Fahrzeug anklappbaren Spiegelkopf, wobei das Gelenk ein spiegelfußfestes Rohrstück sowie eine Hülse aufweist, die durch eine Feder koaxial auf das Rohrstück aufgedrückt ist, sowie mit einer Begrenzereinrichtung für die Drehbewegungen des Spiegelkopfes um das Rohrstück und einem Schwenkwegbegrenzer mit wenigstens zwei zusammenwirkenden Elementen, von denen eines am Spiegelkopf und das andere an einem koaxial zum Rohrstück am Gelenk angeordneten und mit dem Motor in Antriebsverbindung stehenden Bauelement ausgebildet ist.

Bei dem Kraftfahrzeug-Außenrückspiegel gemäß EP-A-652 135, der die vorstehend genannten Merkmale aufweist, ist eine als bolzenartiges Bauteil ausgebildete Gelenkachse vorgesehen, die ein mit dem Bauteil drehfest verbundenes Stützelement sowie ein Fußteil und einen Ansatz durchdringt,und wobei auf der vom Fußteil abgewandten Seite des Ansatzes ein Zahnrad frei drehbar : gelagert ist, dessen Verzahnung mit einer Gegenverzahnung kämmt, welche von einem am Ansatz angeordneten Antriebsmotor angetrieben ist. Ferner ist auf der dem Ansatz abgewandten Stirnseite des Zahnrades ein von dem Bauteil durchdrungener, mit diesem drehfest verbundenerRing angeordnet, der durch vorgespannte Federmittel gegen das Zahnrad gedrückt ist, wobei der Ring wenigstens einen Mitnahmevorsprung aufweist, der passend in eine Mitnahmeeinsenkung des Zahnrades eingreift.

Der in dem Dokument EP-A-166 378 beschriebene Fahrzeugaußenspiegel ist in seiner Gebrauchslage durch ein elektrisches Schaltorgan bestimmt, welches vom Spiegelkopf betätigt werden kann und bei Erreichen der Gebrauchslage den Motor stillsetzt. Dieses elektrische Schaltorgan erweist sich als nicht hinreichend betriebssicher, weil es aufgrund der Umwelteinflüsse, denen der Außenspiegel ausgesetzt ist, relativ rasch funktionsuntüchtig wird.

In dem Dokument DE-A-40 23 375 ist in anderem Zusammenhang das elektrische Schaltorgan durch ein mechanisches Zusammenwirken von Vorsprung und Anschlag ersetzt. Das Gelenk besitzt jedoch zahlreiche bewegliche Teile, die den Zusammenbau des Außenspiegels komplizieren und seine Herstellung verteuern.

Der Erfindung liegt die Aufgabe zugrunde, einen Außenspiegel anzugeben, der sich bei wenigstens gleichem Betriebsverhalten einfacher herstellen läßt.
Ausgehend von dem eingangs genannten Fahrzeugaußenspiegel ist dazu erfindungsgemäß vorgesehen, daß das Bauteil eine Rastscheibe ist, und daß ein Klappwegbegrenzer mit Vorsprung und Anschlag vorgesehen ist, wobei einer von beiden am Spiegelfuß und der andere am Spiegelkopf oder an der Rastscheibe ausgebildet ist. Damit wird durch das Zusammenwirken dreier Bauteile, nämlich dem Spiegelkopf, dem Spiegelfuß und der Rastscheibe ein auf Dauer betriebssicherer Anschlag für die Gebrauchslage des Spiegelkopfes geschaffen, wobei die wenigen hierfür benötigten Teile sich leicht zusammenbauen lassen.

Von den in den Unteransprüchen angegebenen Ausführungsbeispielen der Erfindung ist vor allem dasjenige hervorzuheben, bei welchem das an der Rastscheibe ausgebildete Element eine Ausnehmung aus der der Hülse oder einem Rahmenteil für den Spiegelkopf zugewandten Oberfläche der Rastscheibe ist, welche wenigstens einen Schwenkanschlag aufweist. Hierbei läßt sich der Spiegelkopf auch dann motorisch vom Fahrzeuginneren aus in die definierte Gebrauchslage überführen, wenn der Spiegelkopf durch Schlageinwirkung in Fahrtrichtung abgeklappt ist.

Die Erfindung wird nachstehend anhand der in der beigefügten Zeichnung dargestellten Ausführungsbeispiele im einzelnen beschrieben. Es zeigen:
- Fig. 1: einen Axialschnitt durch das Gelenk mit Teilen des Spiegelfußes und des Spiegelkopfes eines Außenspiegels;
- Fig. 2: die Ansicht eines Schnittes II-II aus Fig. 1;
- Fig. 3: die Ansicht eines Schnittes III-III aus Fig. 1;
- Fig. 4: bis 7 schematische Darstellungen einzelner Betriebszustände einer anderen Ausführungsform eines Außenspiegels;
- Fig. 8: eine der Fig. 1 entsprechende Ansicht einer weiteren Ausführungsform der Erfindung;
- Fig. 9: eine Ausschnittsansicht BB aus Fig. 8;
- Fig. 10: eine schematische Darstellung einer der Ausführungsform nach Fig. 8 ähnlichen Gestaltung, und
- Fig. 11: eine der Fig. 10 ähnliche Darstellung einer weiteren Modifikation.

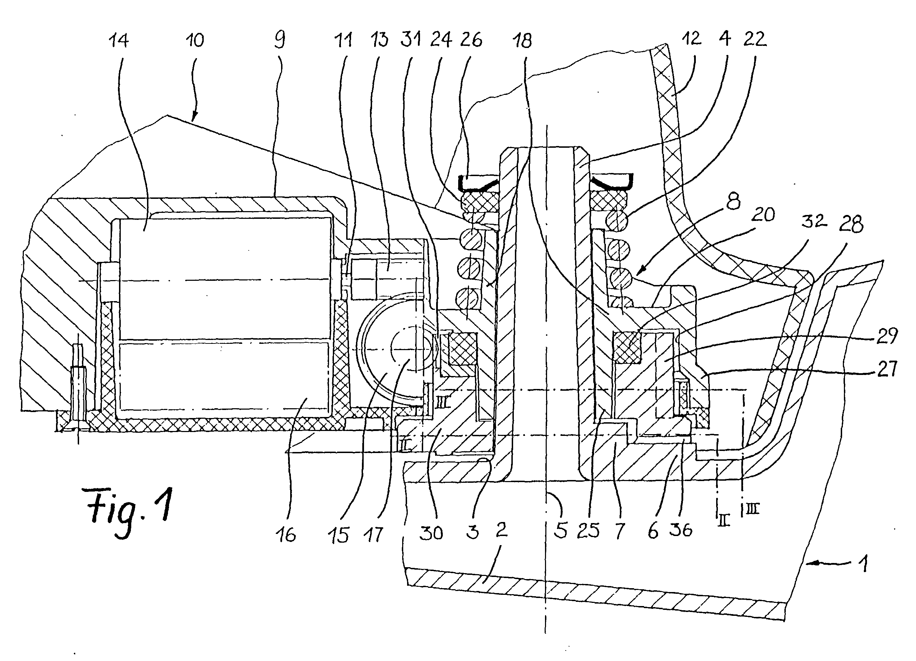

Ein teilweise dargestellter im Ganzen mit 1 bezeichneter Spiegelfuß ist in seinem in Fig. 1 rechter Hand nicht mehr dargestellten Teil mit einer Befestigungsvorrichtung ausgerüstet, mit der er an der linken Fahrertür beispielsweise eines Personenkraftwagens befestigt werden kann. Der Spiegelfuß 1 weist einen von der Befestigungsvorrichtung nach außen abstehenden hohlen Arm 2 auf, aus dessen im wesentlichen ebener Oberseite 3 ein hohles Rohrstück 4 aufragt. Aus der Oberseite 3 steht neben dem Rohrstück 4 als ein erstes Rastteil eine im Querschnitt keilförmige Rippe 6 nach oben vor, die sich radial zur Achse 5 des Rohrstücks 4 erstreckt. Zwischen der Rippe 6 und dem Rohrstück 4 erhebt sich aus der Oberseite 3 ferner ein Vorsprung 7, der höher ist als die Rippe 6 und in die Außenwand des Rohrstücks 4 übergeht.

Der Spiegelkopf 10 trägt ein hier nicht dargestelltes Spiegelglas sowie ein Spiegelgehäuse 12, welches die einzelnen Baugruppen des Spiegelkopfes 10, wie beispielsweise einen Verstellmechanismus für das Spiegelglas, einen vom Spiegelkopf getragenen Schwenkmotor 14 mit zugehörigem Steuermodul 16 sowie das das Rohrstück 4 umfassende Gelenk 8 umgibt. Zu dem Gelenk 8 gehört eine an einem Rahmen 9 des Spiegelkopfes 10 ausgebildete Hülse 18, welche nach Art einer Buchse die Außenwand des Rohrstücks 4 umschließt, so daß der Spiegelkopf 10 um die Achse 5 des Rohrstücks 4 drehbar und damit schwenk- und klappbar ist. Aus einem etwa mittleren Abschnitt der Hülse 18 steht eine Stützflansch 20 ringförmig vor, auf dem sich ein Ende einer Spiral-Druckfeder 22 abstützt. Das obere Ende der Feder 22 liegt über eine Zwischenscheibe 24 an einer Arretierplatte 26 an, die am oberen Ende des Rohrstücks 4 in eine umlaufende Kerbe in der Außenkontur des Rohrstücks 4 oder gegen eine nicht dargestellte radial vorspringende Ringschulter des Rohrstücks 4 anliegt. Damit stützt sich die Feder 22 auf dem Rohrstück 4 ab und drückt die Hülse 18 und damit den Spiegelkopf 10 auf das Rohrstück 4 auf.

Im unteren Abschnitt weist die Hülse 18 eine nach unten offene, topfförmige Ringkammer 28 auf, in welcher eine mit der Hülse 18 nicht verbundene Rastscheibe 30 beherbergt ist. Die Kammer 28 wird nach radial außen von einer Ringschürze 27 begrenzt, aus welcher radial einwärts eine in Fig. 1 gestrichelt dargestellte Nase 29 vorsteht. Radial einwärts wird die Ringkammer 28 durch die das Rohrstück 4 umgreifende Ringwand 25 der Hülse 18 sowie nach oben von dem Stützflansch 20 begrenzt.

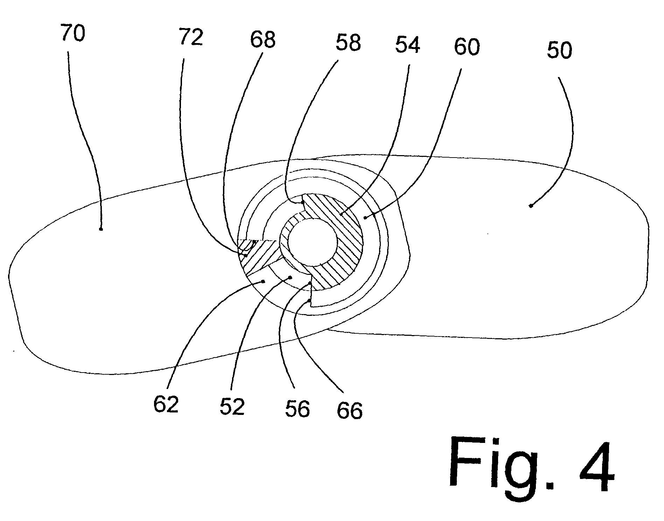

Die Rastscheibe 30 besitzt zunächst an ihrem oberen inneren Rand eine umlaufende Nut, in welcher ein Gleitring 32 beherbergt ist. Der Gleitring 32 erlaubt eine Relativdrehung zwischen Hülse 18 und Rastscheibe 30. Die Rastscheibe 30 besitzt ferner an ihrem äußeren Umfang im Bereich der Nase 29 eine bogenförmige Umfangsnut 34 (Fig. 3), welche von zwei Schwenkanschlägen 31, 33 begrenzt ist. Der in Umfangsrichtung genommene Abstand der Schwenkanschläge 31 und 33 bestimmt denjenigen Winkel, um den der Spiegelkopf 10 motorgetrieben verschwenkt werden kann. Wie aus Fig. 3 ersichtlich ist, taucht die Nase 29 in die Umfangsnut 34 ein.

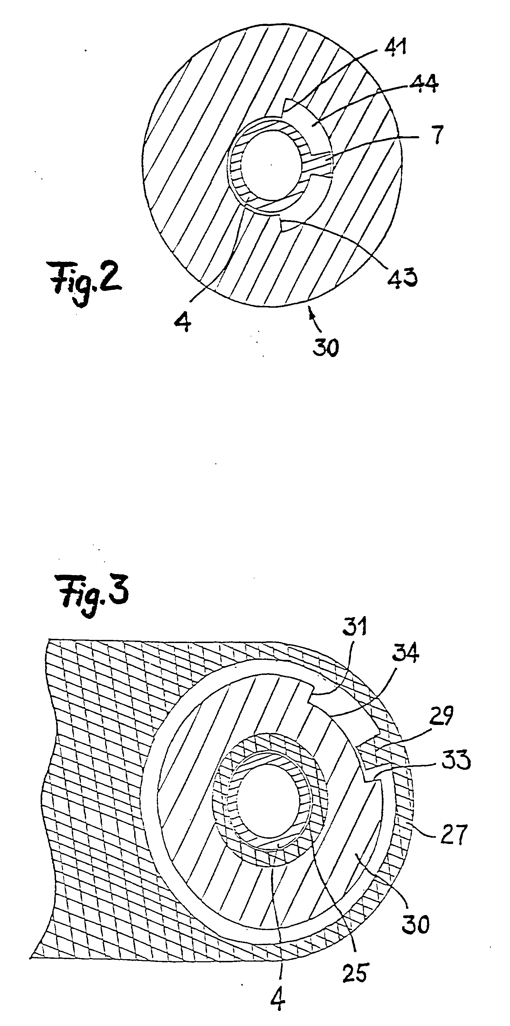

An ihrer Unterseite besitzt die Rastscheibe 30 als zweites Rastteil eine im Querschnitt keilförmige, sich radial erstreckende Ausnehmung 36, deren Form der Rippe 6 angepaßt ist. Ferner besitzt die Rastscheibe 30 an ihrem unteren inneren Ende eine bogenförmige Umfangsausnehmung 44 (Fig. 2), die in Umfangsrichtung von zwei gegenüberliegenden Klappanschlägen 41, 43 begrenzt ist. Wie Fig. 2 zeigt, ist in der Umfangsausnehmung 44 der Vorsprung 7 eingefangen. Der in Umfangsrichtung genommene Abstand der Klappanschläge 41, 43 bestimmt den Winkel des Klappweges des Spiegelkopfes 10 beim Klappen aus seiner Gebrauchslage nach vorne und nach hinten.

Auf die Abtriebswelle 11 des am Rahmen 9 gelagerten Schwenkmotors 14 ist eine sich quer zur Achse 5 erstrekkende Gewindewelle 13 aufgekeilt, die mit einem unter ihr angeordneten Ritzel 15 kämmt. Das Ritzel 15 trägt unverdrehbar eine weitere, senkrecht zur Ebene der Fig. 1 stehende Gewindeschnecke 17, in welche ein mit einer Getriebezahnung versehener oberer Abschnitt 31 der Rastscheibe 30 eingreift. Unterhalb des Motors 14 ist das Steuermodul 16 am Rahmen 9 befestigt.

Zum Zusammenbau wird zunächst die Rastscheibe 30 so auf das Rohrstück 4 von oben aufgeschoben, daß einerseits die Rippe 6 in dem zweiten Rastteil 36 sitzt und andererseits der Vorsprung 7 in der Ausnehmung 44 eingefangen ist. Sodann wird die Hülse 18 mit Spiegelkopf 10 über das Rohrstück 4 geschoben, so daß deren untere Ringwand 25 zwischen Rastscheibe 30 und Rohrstück 4 gelangt (Fig. 3). Nach Aufsetzen der Feder 22 auf den Flansch 20, Aufschieben der Zwischenscheibe 24 auf die Feder 22 und deren Verankerung durch Aufsetzen der Arretierplatte 26 bis zu deren Einrasten am Rohrstück ist die Montage des Spiegelkopfes 10 am Spiegelfuß 1 abgeschlossen, wobei dann auch der Gewindeabschnitt 31 in das Gewinde der Schnecke 17 eingreift und die Nase 29 in der Umfangsnut 34 eingefangen ist.

In der Gebrauchslage des Spiegelkopfes 10 befindet sich der Vorsprung 7 etwa in der Mitte der Längsausdehnung der Ausnehmung 44 und die Nase 29 liegt am ersten Schwenkanschlag 33 an. Beaufschlagt das Steuermodul 16 den Schwenkmotor 14 im Sinne eines Heranschwenkens des Spiegelkopfes 10 an das (nicht dargestellte) Fahrzeug, dreht die Schnecke 17 auf dem Zahnkranz 31 der Rastscheibe 30 ab, welche durch die Druckfeder 22 in Eingriff mit der Rippe 6 und damit relativ zum Spiegelfuß 1 unverdrehbar gehalten ist. Der Spiegelkopf 10 mit Hülse 18 schwenkt dann nach hinten gegen Fahrtrichtung zum Fahrzeug, wobei die Hülse 18 zwischen dem Fuß der Feder 22 und dem Gleitring 32 gleitet. Während des Abschwenkens wandert die Nase 29 innerhalb der Umfangsnut 34 bis zum Anschlag an den zweiten Schwenkanschlag 31, der die Schwenkbewegung des Spiegelkopfes 10 begrenzt. Bei umgekehrter Beaufschlagung des Schwenkmotors 14 durch das Steuermodul 16 wird der Spiegelkopf in umgekehrter Richtung wieder in die Gebrauchslage geschwenkt, bei der die Nase 29 dann in der Umfangsnut 34 bis zum ersten Schwenkanschlag 33 wandert.

Wird auf den Spiegelkopf 10 ein hinreichend starker Schlag gegen Fahrtrichtung bei unaktiviertem Schwenkmotor 14 ausgeübt, bewirkt dieser wegen der Zwangskopplung der Rastscheibe 30 über den Getriebabschnitt 31 mit der Gewindewelle 17 ein axiales Anheben der Rastscheibe 30 gegen die Wirkung der Feder 22 bis zur Befreiung des zweiten Rastteils 36 aus dem Eingriff mit dem ersten Rastteil 6, so daß der Spiegelkopf 10 mit Rastscheibe 30 dem Schlag durch Einklappen nach hinten ausweichen kann. Während des Einklappens bewegt sich der erste Klappanschlag 43 auf den Vorsprung 7 zu, während die Rippe 6 auf der sonst planen Unterfläche der Rastscheibe 30 reitet. Das Einklappen wird begrenzt durch Anlage des ersten Klappanschlags 43 an den Vorsprung 7.

Wenn der Spiegelkopf soweit nach hinten abgeklappt ist, daß der erste Klappanschlag 43 an dem Vorsprung 7 anliegt, ist die Anordnung von Nase 29 am ersten Schwenkanschlag 33 gegenüber der Darstellung in Fig. 3 um einen entsprechenden Bogen im Gegensinn des Uhrzeigers verdreht. Zum motorischen Rückstellen des Spiegelkopfes 10 in die Gebrauchslage wird bei Aktivierung des Schwenkmotors 14 zunächst die Rastscheibe 30 sich soweit in Uhrzeigerrichtung ohne Änderung der Spiegelkopflage verdrehen, bis der zweite Schwenkanschlag 31 an der Nase 29 zur Anlage kommt. In dieser Stellung befindet sich das zweite Rastteil 36 wieder über der Rippe 6, so daß die Rastscheibe 30 wieder am Spiegelfuß 1 verrastet. Eine Fortsetzung der Drehung des Schwenkmotors 14 läßt bei eingerasteter Rastscheibe 30 die Nase 29 vom ersten Schwenkanschlag 31 zum die Gebrauchslage definierenden zweiten Schwenkanschlag 33 wandern, so daß der Spiegelkopf 10 wieder die Gebrauchslage erreicht. Das das erste Rastteil 6 und der Vorsprung 7 am Spiegelfuß 1 ausgebildet sind, ergibt sich dieses Betriebsverhalten aus dem Umstand, daß die in Umfangsrichtung genommene Länge der Ausnehmung 44 zwischen Vorsprung 7 und erstem Klappanschlag 43 gleich der in Umfangsrichtung genommenen Länge der Umfangsnut 34 weniger der Stärke der Nase 29 ist.

Wenn auf den Spiegelkopf 10 ein von hinten gerichteter Schlag in Fahrtrichtung ausgeübt wird, löst sich wegen der Verzahnung der Rastscheibe 30 mit dem Getriebe 31, 17, 13, 11 die Rastscheibe 30 aus ihrer Verankerung auf der Rippe 6 gegen die Wirkung der Feder 22, so daß der Spiegelkopf 10 frei nach vorne bis zur Anlage des Vorsprungs 7 an dem zweiten Klappanschlag 41 schwenken kann, wobei wieder die Rippe 6 auf der planen Unterseite der Rastscheibe 30 gleitet.

Bei einem anderen Ausführungsbeispiel der Erfindung kann die Nase aus der Rastscheibe radial vorstehen und in eine Umfangsnut in der Ringschürze eingreifen, wobei dann die Enden der Nut die Schwenkanschläge bilden. Ferner kann auch der Vorsprung an der Rastscheibe nach radial einwärts vorspringend vorgesehen sein, welcher in eine an der Wand des Rohrstücks ausgebildete Ausnehmung eintaucht, wobei die Enden dieser Ausnehmung dann die beiden Klappanschläge sind.

Die in den Figuren 4 bis 7 schematisch dargestellte Ausführungsform der Erfindung unterscheidet sich in der Anordnung der Nuten in der Rastscheibe und am Spiegelfuß; ferner ist nur ein einziger Nocken am Spiegelkopf vorgesehen, der an seinem freien Ende die Funktion des oben beschriebenen Vorsprungs und in seinem spiegelkopfnahen Abschnitt die Funktion der oben beschriebenen Nase erfüllt. Der Spiegelfuß 50 weist wieder ein Rohrstück 54 auf, an welchem ein Umfangsausschnitt 52 mit zwei gegenüberliegenden Klappanschlägen 56 und 58 ausgebildet ist. Entsprechend weist eine am Spiegelfuß 50 lösbar verrastete Rastscheibe 60 einen Umfangsausschnitt 62 auf, der von zwei Schwenkanschlägen 66 und 68 begrenzt ist. Am Spiegelkopf 70 ist ein Nocken 72 vorgesehen, der sowohl in die Umfangsnut 62 wie auch in die Ausnehmung 52 hineinragt.

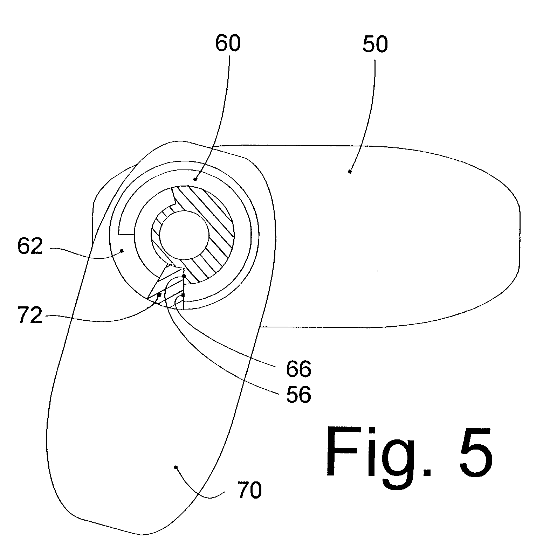

Bei der in Fig. 4 dargestellten Gebrauchslage des Spiegelkopfes 70 befindet sich der Nocken 72 etwa mittig innerhalb der Ausnehmung 52 und liegt an dem ersten Schwenkanschlag 68 der Nut 62. Nach dem motorischen Heranschwenken des Spiegelkopfes 70 an den Spiegelfuß 50 bleibt die Rastscheibe 60 mit dem Spiegelfuß 50 verrastet, so daß die Nocke 72 in der Ausnehmung 52 sowohl zum ersten Klappanschlag 56 wie auch in der Nut 62 zum ersten Schwenkanschlag 66 wandert, welche beide auf gleichem Radius zur Schwenkachse liegen (Fig. 5).

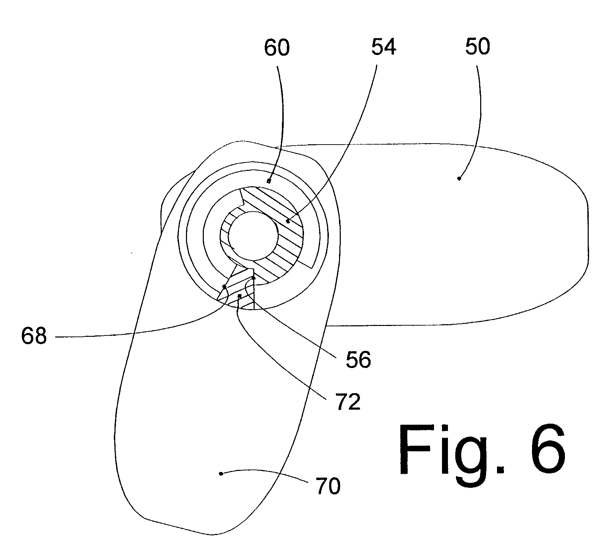

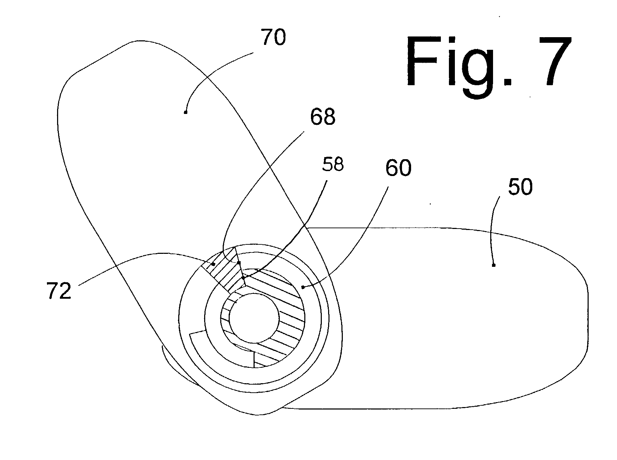

Wird der Spiegelkopf 70 dagegen aus der Gebrauchslage gemäß Fig. 4 durch Schlageinwirkung nach hinten abgeklappt (Fig. 6), dreht die entrastete Rastscheibe 60 mit dem Spiegelkopf 70 nach hinten, so daß die Nocke 72 am ersten Schwenkanschlag 68 verbleibt, jedoch aus der Mitte der Ausnehmung 52 zum ersten Klappanschlag 56 wandert. Die Rückstellung des Spiegelkopfes 70 gelingt wieder wie oben anhand des ersten Ausführungsbeispiels der Erfindung beschrieben. Beim Abklappen nach vorne (Fig. 7) verbleibt die Nocke 72 am ersten Schwenkanschlag 68 und dreht mit der entrasteten Rastscheibe 60 gegen den zweiten Klappanschlag 58. Die Rückstellung des Spiegelkopfes 70 in die Gebrauchslage (Fig. 4) gelingt wieder wie beim ersten Ausführungsbeispiel der Erfindung.

Es liegt im Rahmen der Erfindung, statt der durch den Gleitring 32 und die Stützfläche 20 gebildeten Gleitlager für die Hülse 18 Kugellager vorzusehen, von denen eines an die Stelle des Gleitrings 32 tritt und deren anderes in einem zusätzlichen, in die Fläche 20 eingebrachten Ring eingebettet und mit aufgesetzter Stützplatte zum Abstützen der Feder 20 versehen ist.

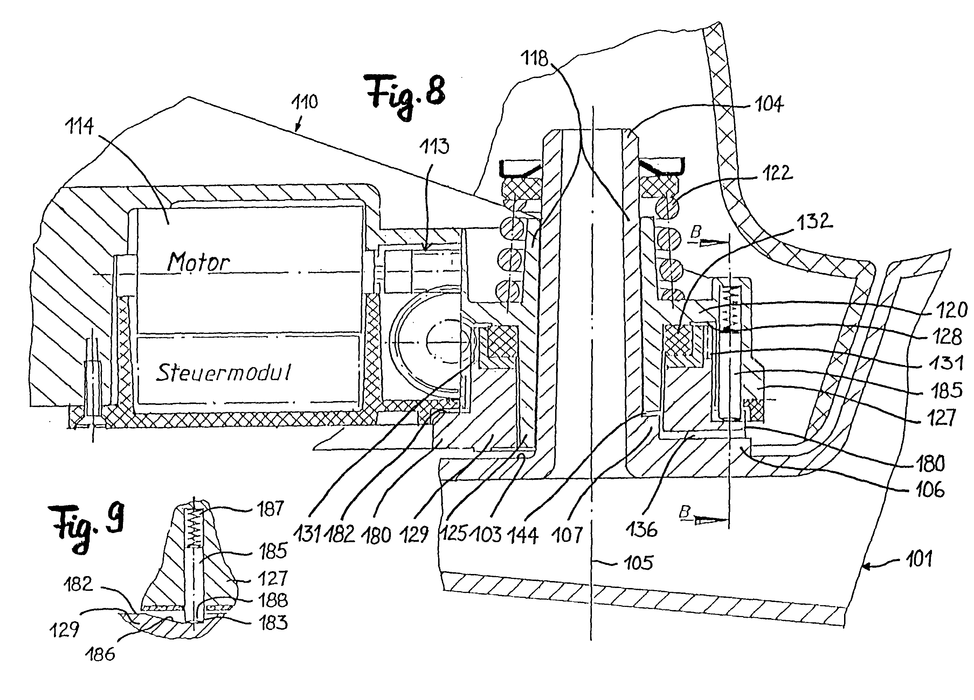

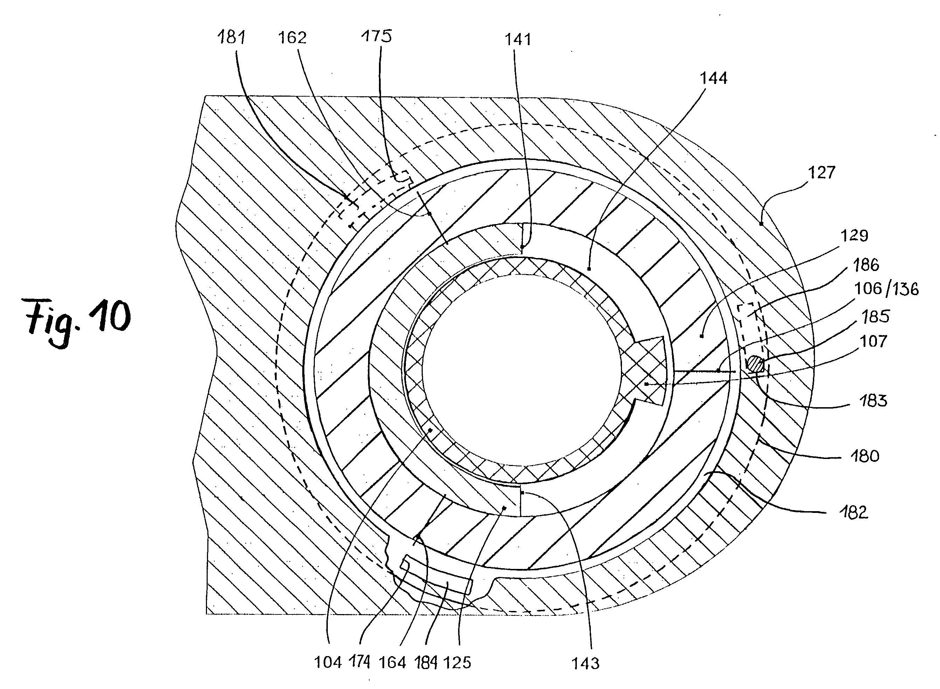

Die in den Figuren 8 und 9 dargestellte Ausführungsform der Erfindung weist einen Spiegelfuß 101 und einen Spiegelkopf 110 auf, welcher mittels einer Hülse 118, die ein sich aus der Oberseite 103 des Spiegelfußes 101 erhebendes Rohrstück 104 koaxial zu dessen Achse 105 umgibt, relativ zum Spiegelfuß 101 um die Achse 105 drehbar ist. Die Hülse 118 wird durch eine sich am Rohrstück 104 abstützende Druckfeder 122 auf das Rohrstück 104 aufgedrückt und ist in der unteren Hälfte zu einer Ringkammer 128 ausgebildet. Die nach unten zum Spiegelfuß 101 hin offene Ringkammer 128 besitzt eine äußere Ringschürze 127 und einen oberen Stützflansch 120, auf dem sich die Druckfeder 122 abstützt, sowie eine Innenwand 125, die der untere Teil der Hülse 118 ist. In der Ringkammer 128 ist eine Rastscheibe 129 eingefangen, die am oberen äußeren Ende mit einem Zahnkranz 131 versehen ist. Der Stützflansch 120 drückt die Rastscheibe 129 über das Gleitlager 132, das auch ein Kugellager sein kann, auf die Oberseite 103 des Spiegelfußes.

Aus der Oberseite 103 erhebt sich ein radiales, rippenförmiges erstes Rastelement 106, und die der Oberseite 103 zugewandte Unterseite der Rastscheibe 129 besitzt drei zweite Rastelemente 136 in Form radialer, im Querschnitt dreieckförmiger, der Form des ersten Rastelements 106 angepaßter Einsenkungen, die in Umfangsrichtung der Rastscheibe 129 gleich beabstandet sind, so daß umfangmäßig benachbarte zweite Rastelemente 136 einen Winkel von 120° einschließen.

Radial innerhalb des ersten Rastelements 106 ist an dem Fuß des Rohrstücks 104 ein Vorsprung 107 ausgebildet, der in einer Umfangsausnehmung 144 mit den beiden Klappanschlägen 141 und 143 in der Wand 125 der Hülse 118 eingefangen ist. Aus Fig. 8 und 10 erkennt man, daß der Vorsprung 107 radial nicht über die Stärke der Wandung 125 vorsteht.

Die Rastscheibe 129 gemäß Fig. 8 besitzt an ihrem unteren Abschnitt einen radial nach außen weisenden Absatz 180 unter Bildung einer zur Achse 105 querliegenden Ringfläche 182. In die Ringfläche 182 sind drei Vertiefungen 186, 184, 181 eingeprägt, die bei Draufsicht in Uhrzeigerrichtung in je einem achsparallelen Schwenkanschlag 183, 174, 175 enden und gegenüber dem Schwenkanschlag 183, 174, 175 in je einer ansteigenden Rampe in die Ringfläche 182 übergehen. Über den Umfang der Ringschulter 182 sind die drei Schwenkanschläge 183, 174, 175 in gleichem winkelmäßigen Abstand ausgebildet, so daß je zwei benachbarte Schwenkanschläge einen Winkel von 120° einschließen.

In das Fleisch der Ringschürze 127 ist parallel zur Achse 105 eine Blindbohrung 187 eingebracht, in welcher ein federbelasteter Stift 185 verschieblich gelagert ist. Die Ringfläche 182 erstreckt sich dicht unterhalb der Öffnung der Blindbohrung 187, so daß der Arretierstift 185 auf einer Kreisbahn der Ringfläche 182 reitet, wenn die Rastscheibe 129 relativ zur Ringschürze 127 und damit zum Spiegelkopf 110 gedreht wird. Man erkennt, daß bei einer Drehung des Spiegelkopfes 110 bei Draufsicht in Uhrzeigerrichtung, an der der Stift 185 teilnimmt, sein aus der Ringschürze 127 hervortretendes und auf der Ringfläche 182 aufsitzendes Ende 188 gegen einen der Schwenkanschläge 183, 174, 175 anlaufen würde, wenn die Rastscheibe 129 drehfest gehalten wird.

Ein erstes Rastelementenpaar, bestehend aus dem ersten Rastelement 106 und dem zweiten Rastelement 136, ist in Fig. 10 mit 106/136 bezeichnet. Die Lage eines zweiten Rastelementenpaares ist bei 164 und diejenige eines dritten Rastelementenpaares bei 162 angegeben. Das zweite und dritte Rastelementenpaar entsprechen in Form und Art der gegenseitigen Eingriffsmöglichkeit ihrer Rastelemente dem ersten Rastelementenpaar. Je zwei Rastelementenpaare schließen einen Umfangswinkel von etwa 120° ein.

Bei der in Fig. 10 dargestellten Gebrauchslage des Spiegelkopfes 110 liegt das Ende 188 des Stiftes 185 gegen den Schwenkanschlag 183 an. Beim motorischen Abschwenken des Spiegelkopfes 110 drehen sich die Ringschürze 127 sowie die Wand 125 der Hülse 118 im Gegensinn des Uhrzeigers während die Rastscheibe 129 durch Eingriff des ersten Rastelements 106 in das zweite Rastelement 136 mit dem Rohrstück 104 und damit mit dem Spiegelfuß 101 fest gekoppelt bleibt. Während des Abschwenkens des Spiegelkopfes 110 reitet der Stift 185 auf der Ringfläche 182. Das Ende des motorischen Abschwenkens wird erreicht, wenn der Klappanschlag 143 gegen den Vorsprung 107 anläuft.

Die motorische Rückstellung des Spiegelkopfes in die Gebrauchslage führt zu einer Drehung der Ringschürze 127 sowie der Wand 125 in Uhrzeigerrichtung, bis der Stift 183 gegen den die Gebrauchslage definierenden Schwenkanschlag 183 anläuft.

Bei Schlag auf den Spiegelkopf gegen Fahrtrichtung nach hinten und nicht aktiviertem Motor 114 bleibt die Rastscheibe 129 über das Getriebe 113 mit dem Spiegelkopf 110 gekoppelt, so daß die Rastscheibe gegen die Wirkung der Druckfeder 122 aus dem Eingriff der Rastelemente der drei Rastelementenpaare 106/136, 164, 162 sich befreit und mit dem Spiegelkopf nach hinten dreht. Während dieser Drehung bleibt der Stift 185 in Anlage an Schwenkanschlag 183. Die Klappendlage ist wieder definiert durch Anlaufen des Klappanschlages 143 gegen den Vorsprung 107. Bei Aktivierung des Motors 114 wird jetzt zunächst die Rastscheibe in Uhrzeigerrichtung bei abgeklapptem Spiegelkopf gedreht, weil der am Schwenkanschlag 183 anliegende Stift 185 keine andere Relativdrehung der Rastscheibe und damit der Vertiefung 186 relativ zum Spiegelkopf und damit zum Stift 185 erlaubt, bis die Rastelemente der drei Rastelementenpaare 106/136, 164, 162 wieder in Eingriff gelangen. Bei dieser Bewegung der Rastscheibe 129 in Uhrzeigerrichtung gelangt der Stift 185 aus der Anlage an 183 und aus der Vertiefung 186 heraus bis in eine Position, die dem vorher erwähnten Abschwenken des Spiegelkopfes nach rückwärts entspricht. Weiteres Aktivieren des Motors 114 führt den Spiegelkopf dann wieder in die Gebrauchslage zurück.

Wird ein Schlag auf den Spiegelkopf 110 nach vorne in Fahrtrichtung ausgeübt, befreit sich die Rastscheibe 129 aus dem Eingriff der drei Rastelementenpaare 106/136, 164, 162 und dreht mit der Ringschürze 127 in Uhrzeigerrichtung maximal bis zum Anlaufen des Klappanschlages 141 gegen den Vorsprung 107. Eine Aktivierung des Motors 114 bewirkt zunächst ein Drehen der Rastscheibe 129 in Uhrzeigerrichtung, bis die Rastelemente der Rastelementenpaare wieder in Eingriff gelangen. Dabei gelangt ein erstes Rastelement eines Rastelementenpaares in Eingriff mit dem zweiten Rastelement des in Uhrzeigerrichtung benachbarten Rastelementenpaares. Dabei dreht die Ringfläche 182 mit den Vertiefungen 181, 184, 186 unter dem Stift 185 des abgeklappt bleibenden Spiegelkopfes 110 vorbei und der Klappanschlag 141 liegt nach wie vor am Vorsprung 107 an. Nach Einrasten der Rastelementenpaare ist die Rastscheibe 129 dann spiegelfußfest. Bei weiterer Aktivierung des Motors 114 schwenkt der Spiegelkopf 110 von vorne über die Gebrauchslage (in der der Stift 185 in die Vertiefung 181 eintaucht) bis zur Schwenkendlage, bei der der Klappanschlag 143 am Vorsprung 107 anliegt. Aktivieren des Motors in die umgekehrte Drehrichtung führt den Spiegelkopf 107 wieder in die Gebrauchslage.

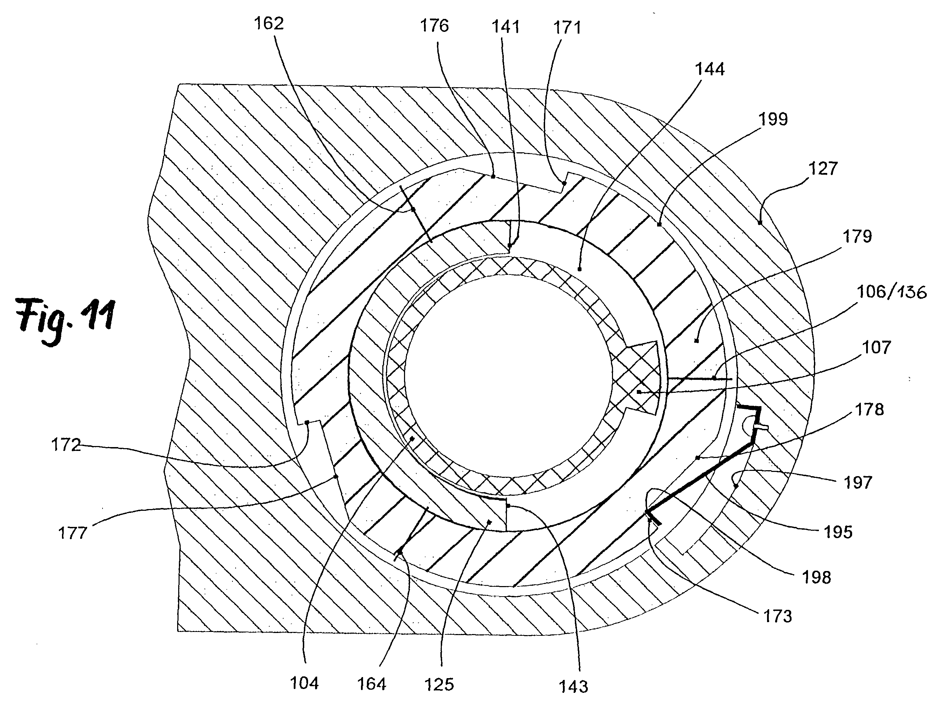

Die in Fig. 11 dargestellte Ausführungsform der Erfindung unterscheidet sich von derjenigen gemäß den Figuren 8 bis 10 zunächst dadurch, daß in die kreisförmige Innenwand der Ringschürze 127 eine Nische 1971 eingebracht ist, in welcher eine Hakenfeder 195 verankert ist. Die Hakenfeder 195 weist an ihrem freien radialelastischen Ende eine Haken 198 auf, der radial in die Bewegungsbahn der Rastscheibe 179 vordringt.

In den der Nische 197 gegenüberliegenden Mantel 199 der Rastscheibe 179 sind drei Kerben 178, 1761, 177 solcher Form eingebracht, daß jede Kerbe einen radialen Schwenkanschlag 173, 171, 172 aufweist und die Kerben 178, 176 und 177 in Umfangsrichtung jeweils um 120 Grad beabstandet sind. Der Haken 198 kann sich bei Drehung der Rastscheibe 179 in Gegenrichtung des Uhrzeigers und ruhender Ringschürze 127 an einem der Schwenkanschläge 173, 172, 171 verkeilen und blockiert eine weitere Drehung der Rastschscheibe 179 in Gegenrichtung des Uhrzeigers oder eine Drehung des Spiegelkopfes 110 in Uhrzeigerrichtung relativ zur Rastscheibe 179.

Im übrigen gleicht diese Ausführungsform der Erfindung derjenigen, die im Zusammenhang mit Figuren 8 bis 10 beschrieben worden ist. Man erkennt, daß die Hakenfeder 195 mit Haken 198 dem Stift 185 mit unteren Ende 188 sowie die Schwenkanschläge 173, 171, 172 den Schwenkanschlägen 183, 175, 174 entsprechen. Das Betriebsverhalten der in Figur 11 dargestellten Ausführungsform der Erfindung gleicht daher denjenigen, die im Zusammenhang mit Figuren 8 bis 10 beschreiben worden ist, so daß darauf Bezug genommen werden kann.

Wie man sieht, ist der Klappanschlag 143 zugleich Schwenkanschlag für das motorische Abschwenken des Spiegelkopfes nach hinten.

## Patentansprüche

1. Fahrzeugaußenspiegel mit einem am Fahrzeug befestigbaren Spiegelfuß ((1) und einem ein Spiegelglas tragenden, mittels eines Motors (14) relativ zum Spiegelfuß (1) verschwenkbaren, am Spiegelfuß mit einem Gelenk (8) befestigten und unter Schlageinwirkung aus einer Gebrauchslage an das Fahrzeug anklappbaren Spiegelkopf (10), wobei das Gelenk ein spiegelfußfestes Rohrstück (4) sowie eine Hülse (18) aufweist, die durch eine Feder (22) koaxial auf das Rohrstück (4) aufgedrückt ist, sowie mit einer Begrenzereinrichtung für Drehbewegungen des Spiegelkopfes (10) um das Rohrstück (4) und einem Schwenkwegbegrenzer mit wenigstens zwei zusammenwirkenden Elementen (29, 34; 72, 62; 185, 186, 181, 184, 107, 143; 195, 178, 176, 177, 107, 143), von denen eines am Spiegelkopf und das andere an einem koaxial zum Rohrstück am Gelenk angeordneten und mit dem Motor in Antriebsverbindung stehenden Bauelement ausgebildet ist, dadurch gekennzeichnet, dass das Bauelement eine Rastscheibe (30, 60, 129, 179) ist, und daß ein Klappwegbegrenzer mit Vorsprung (7, 72, 107) und Anschlag (41, 43; 58, 56; 141, 143) vorgesehen ist, wobei einer von beiden am Spiegelfuß (1, 4, 104) und der andere am Spiegelkopf (10, 110) oder an der Rastscheibe ausgebildet ist.

2. Spiegel nach Anspruch 1, dadurch gekennzeichnet, daß die Rastscheibe in einer die Hülse (18, 118) umgebenden Ringkammer (28, 128) drehbar eingefangen ist.

3. Spiegel nach Anspruch 1 oder 2, dadurch gekennzeichnet, daß die Ringkammer von der Hülse sowie Teilen eines Rahmens (9) gebildet wird, der den Spiegelkopf (10, 110) trägt.

4. Spiegel nach einem oder mehreren der vorstehenden Ansprüche, dadurch gekennzeichnet, daß die Rastscheibe mit dem Spiegelfuß (1, 101) in durch die Schlageinwirkung lösbarer Rastverbindung (6, 36; 106, 136, 162, 164) steht.

5. Spiegel nach Anspruch 4, dadurch gekennzeichnet, daß die Ringkammer zu einem spiegelfußfesten Bauteil (2) offen ist und die Rastverbindung an der zum Bauteil weisenden Oberfläche der Rastscheibe und an dem Bauteil ausgebildet ist.

6. Spiegel nach einem oder mehreren der vorstehenden Ansprüche, dadurch gekennzeichnet, daß das an der Rastscheibe ausgebildete Element eine Ausnehmung (34, 186, 181, 184, 178, 176, 177) aus der der Hülse zugewandten Oberfläche der Rastscheibe (30, 129, 179) ist, welche wenigstens einen Schwenkanschlag (31, 33; 183, 175, 174; 173, 171, 172) aufweist.

7. Spiegel nach Anspruch 6, dadurch gekennzeichnet, daß mehrere gleichartige und in Umfangsrichtung gleich beabstandete Ausnehmungen (186, 181, 184; 178, 176, 177) vorgesehen sind.

8. Spiegel nach Anspruch 6 und/oder 7, dadurch gekennzeichnet, daß das am Spiegelkopf ausgebildete Element eine radial wirkende Hakenfeder (195) oder eine federbelastete axial wirkende Nocke (185) ist.

9. Spiegel nach einem oder mehreren der Ansprüche 6 bis 8, dadurch gekennzeichnet, daß die Ausnehmung eine Umfangsnut (34, 62) ist, deren Enden Schwenkanschläge (31, 33; 66, 68) bilden, und daß das am Spiegelkopf ausgebildete Element eine in die Umfangsnut eintauchende Nase (29, 72) ist.

10. Spiegel nach einem oder mehreren der vorstehenden Ansprüche, dadurch gekennzeichnet, daß der Klappwegbegrenzer eine Umfangsausnehmung (44, 52, 144) sowie einen in ihr eingefangenen Vorsprung (7, 72, 107) aufweist, wobei die Enden der Umfangsausnehmung Klappanschläge (41, 43, 56, 58; 141, 143) bilden.

11. Spiegel nach einem oder mehreren der vorstehenden Ansprüche, dadurch gekennzeichnet, daß die Nase (72) gleichzeitig Vorsprung ist und sowohl in die Umfangsnut (62) wie auch in die Umfangsausnehmung (52) eintaucht.

12. Spiegel nach einem oder mehreren der vorstehenden Ansprüche, vorstehenden Ansprüche, dadurch gekennzeichnet, daß der Klappwegbegrenzer (143, 107) wenigstens in einer Klapprichtung gleichzeitig Schwenkwegbegrenzer in dieser Richtung (Fig. 8-11) ist.

13. Spiegel nach einem oder mehreren der Ansprüche 7 bis 12, dadurch gekennzeichnet, daß zu der Rastverbindung mehrere Rastelementenpaare (106, 136; 162, 164) gehören, die in Umfangsrichtung gleich beabstandet sind.

## Claims

1. An external mirror for a vehicle, said external mirror comprising a mirror base
(1) attachable to the vehicle, a mirror head (10) including a mirror, said mirror head being rotatable relative to said mirror base (1) by a motor (14), said mirror head being fixed to the mirror base by an articulated joint (8) and being able to tilt from an operating position swinging back to the vehicle under impact effect, said articulated joint showing a tubular element (4) fixed to the mirror base and a bushing (18) which is coaxially pressed on the tubular element (4) by a spring (22), and a mechanism for limiting the rotational excursion of the mirror head (10) around the tubular element (4) and a mechanism for limiting the tilting deflection with at least two interacting catch elements for limiting the rotational movements of said mirror head, and a rotation stopper with at least two cooperating elements (29, 34; 72, 62; 185, 186, 181, 184, 107, 143; 195, 178, 176, 166, 107, 143) one of which is disposed on the mirror head and the other is disposed on a component arranged on the articulated joint coaxially to the tubular element and driven by the motor, characterized in that the component is a catch piece (30, 60, 129, 179) and in that a mechanism for limiting the tilting movements with a jut (7; 72, 107) and a tilting stopper (41, 43; 58, 56; 141, 143) is provided for, one of both being placed on the mirror base (1, 4, 104) and the other being placed on said mirror head (10, 110) or on the catch piece.

2. A mirror according to claim 1, characterized in that said catch piece is rotatably housed in a ring-shaped chamber (28, 128) surrounding said bushing (18, 118).

3. A mirror according to claim 1 or 2, characterized in that said ring-shaped chamber is formed from said bushing and parts of a frame (9) providing support to said mirror head (10, 110).

4. A mirror according to one or more of the preceding claims, characterized in that said catch piece engages with said mirror base (1, 101) by a catch mechanism (6, 36; 106, 136, 162, 164) which is releasable when subjected to an impact.

5. A mirror according to claim 4, characterized in that said ring-shaped chamber is open in a direction towards a component (2) fixed to said mirror base, and said catch mechanism is mounted on the surface of said catch piece turned to said component and on said component.

6. A mirror according to one or more of the preceding claims, characterized in that said element placed on said catch piece is a recess (34, 186, 181, 184, 178, 176, 177) on the surface of said catch piece (30, 129, 179) directed towards the bushing, said recess showing at least one rotation stopper 31, 33; 183, 175, 174; 173, 171, 172).

7. A mirror according to claim 6, characterized in that a plurality of similar recesses (186, 181, 184; 178, 176, 177) are provided for which are uniformly spaced apart in the circumferential direction.

8. A mirror according to claim 6 and/or 7, characterized in that said one element disposed on said mirror head is a radially acting hook spring (195) or a springloaded axially acting pin (185).

9. A mirror according to one or more of the claims 6 to 8, characterized in that the recess is a circumferential groove (34, 62), the ends of which constitute rotation stoppers (31, 33; 66, 68) and that said one element disposed on said mirror head is a nose (29, 72) which extends into said circumferential groove.

10. A mirror according to one or more of the preceding claims, characterized in that said mechanism for limiting the tilting movements comprises a circumferential recess (44, 52, 144) and a jut (7, 72, 107) extending into said circumferential recess, the ends of said circumferential recess building tilting stoppers (41, 43, 56, 58; 141, 143).

11. A mirror according to one or more of the preceding claims, characterized in that the nose (72) is at the same time a projection extending into the circumferential groove (62) as well as into said circumferential recess (52).

12. A mirror according to one or more of the preceding claims, characterized in that at least in a tilting direction the mechanism for limiting the tilting movements (143, 107) is at the same time a mechanism for limiting the rotational excursions in that direction (Figs. 8-11).

13. A mirror according to one or more of the claims 7 to 12, characterized in that the catch mechanism comprises a plurality of pairs of catch elements (106, 136; 162, 164) which are equidistantly spaced in the circumferential direction.

## Revendications

1. Rétroviseur extérieur pour véhicule avec une partie formant le pied (1) fixable au véhicule et une partie supérieure ou tête (10) comprenant le miroir, pouvant pivoter par rapport au pied (1) à l'aide d'un moteur (14), fixée au pied à l'aide d'une articulation (8) et pouvant être rabattue sur le véhicule à partir de la position normale d'utilisation, ladite articulation présentant une partie tubulaire (4) fixée au pied et un manchon (18) pressé contre la partie tubulaire (4) de manière coaxiale par un ressort (22 ), et avec un dispositif limitant les rotations de la tête (10) du rétroviseur autour de la partie tubulaire (4) et un limiteur de pivotement avec au moins 2 éléments coopérant ensemble (29, 34 ; 72, 62 ; 185, 186, 181, 184, 107, 143 ; 195, 178, 176, 177, 107, 143) dont l'un est placé sur la tête du rétroviseur et l'autre sur une construction disposée sur l'articulation de manière coaxiale par rapport à la partie tubulaire et commandée par un moteur, caractérisé en ce que la construction est un disque d'arrêt (30, 60, 129, 179) et qu'un limiteur de rabattement avec avancée (7, 72, 107) et butoir (41, 43 ; 58, 56 ; 141, 143) est prévu, l'un des deux étant placé sur le pied du rétroviseur (1, 4, 104) et l'autre sur la tête (10, 110) ou sur le disque d'arrêt.

2. Rétroviseur selon la revendication 1, caractérisé en ce que le disque d'arrêt est maintenu de façon pivotante dans une chambre circulaire (28, 128) entourant le manchon (18, 118).

3. Rétroviseur selon la revendication 1 ou 2, caractérisé en ce que la chambre circulaire est formée par le manchon et des parties du cadre (9) qui supporte la tête (10, 110) du rétroviseur.

4. Rétroviseur selon une ou plusieurs des revendications précédentes, caractérisé en ce que le disque d'arrêt est relié au pied du rétroviseur (1, 101) de telle manière que sous l'effet d'un choc, il se désenclenche (6, 36; 106, 136, 162, 164).

5. Rétroviseur selon la revendication 4, caractérisé en ce que la chambre circulaire est ouverte en direction d'une construction (2) fixée au pied du rétroviseur et que la connexion d'enclenchement se trouve sur la surface du disque d'arrêt dirigée vers la construction et sur la construction.

6. Rétroviseur selon une ou plusieurs des revendications précédentes, caractérisé en ce que l'élément placé sur le disque d'arrêt est un creux (34, 186, 181, 184, 178, 176, 177) dans la surface du disque d'arrêt (30, 129, 179) tournée vers le manchon, lequel disque présente au moins un butoir de pivotement (31, 33 ; 183, 175, 174, 173, 171, 172).

7. Rétroviseur selon la revendication 6, caractérisé en ce que plusieurs creux semblables et également espacés les uns des autres (186, 181, 184 ; 178, 176, 177) sont prévus.

8. Rétroviseur selon la revendication 6 et/ou 7, caractérisé en ce que l'élément placé à la tête du rétroviseur est un ressort à crochet (195) agissant de façon radiale ou une came à ressort (185) agissant de façon axiale.

9. Rétroviseur selon une ou plusieurs des revendications 6 à 8, caractérisé en ce que le creux est une rainure circonférentielle (34, 62) dont les extrémités forment des butoirs de pivotement (31, 33 ; 66, 68) et en ce que l'élément placé à la tête du rétroviseur est un nez (29, 72) entrant dans la rainure circonférentielle.

10. Rétroviseur selon une ou plusieurs des revendications précédentes, caractérisé en ce que le limiteur de rabattement présente un creux circonférentiel (44, 52, 144) et une avancée s'y trouvant encastrée (7, 72, 107), les extrémités du creux circonférentiel formant des butoirs de rabattement (41, 43, 56, 58 ; 141, 143)

11. Rétroviseur selon une ou plusieurs des revendications précédentes, caractérisé en ce que le nez (72) est en même temps l'avancée et plonge aussi bien dans la rainure (62) circonférentielle que dans le creux (52) circonférentiel.

12. Rétroviseur selon une ou plusieurs des revendications précédentes, caractérisé en ce que le limiteur de rabattement (143, 107) est en même temps, au moins dans une direction de rabattement, limiteur de pivotement dans cette direction (Figures 8-11).

13. Rétroviseur selon une ou plusieurs des revendications 7 à 12, caractérisé en ce que plusieurs paires d'éléments d'arrêt (106, 136 ; 162, 164) appartiennent à la connexion d'enclenchement, lesquelles sont espacées de façon équidistante dans le sens de la conférence.
